# EUROPÄISCHE PATENTSCHRIFT

(11) **EP 2 720 918 B1**
(45) Veröffentlichungstag und Bekanntmachung des Hinweises auf die Patenterteilung: **20.04.2016**
(21) Anmeldenummer: 12728535.1
(22) Anmeldetag: 19.06.2012
(51) Int. Cl.: B60T 13/74, B60T 13/58, B60T 7/08

(54) **VERFAHREN ZUM HYDRAULISCHEN UNTERSTÜTZEN EINER ELEKTRISCHEN PARKBREMSE EINES FAHRZEUGS**
METHOD FOR HYDRAULICALLY BOOSTING AN ELECTRIC PARKING BRAKE OF A VEHICLE
PROCÉDÉ D'ASSISTANCE HYDRAULIQUE D'UN FREIN DE STATIONNEMENT ÉLECTRIQUE D'UN VÉHICULE

(30) Priorität: 20.06.2011 DE 102011077786; 12.07.2011 DE 102011079040
(43) Veröffentlichungstag der Anmeldung: 23.04.2014
(73) Patentinhaber: Continental Teves AG&Co. Ohg, 60488 Frankfurt (DE)
(72) Erfinder: BERGER, Klaus, 60437 Frankfurt (DE); LESKA, Peter, 63303 Dreieich (DE); STREHLE, Christian, 70376 Stuttgart (DE); STRECKER, Andreas, 60435 Frankfurt (DE); WIENS, Eduard, 35796 Edelsberg (DE); SCHNEIDER, Heinz-Anton, 65527 Niedernhausen (DE); MARON, Christof, 65779 Kelkheim (DE); WOYWOD, Jürgen, 64546 Mörfelden (DE); PAGEL, Klaus Dieter, 64293 Darmstadt (DE); KEBBEL, Christian, 63110 Rodgau (DE)
(86) Internationale Anmeldenummer: PCT/EP2012/061639
(87) Internationale Veröffentlichungsnummer: WO 2012/175468

(56) Entgegenhaltungen:
- DE-A1-102009 029 525
- DE-A1-102010 029 391
- DE-A1-102010 030 276
- US-A1- 2006 267 402

## Beschreibung

Die Erfindung betrifft ein Verfahren zum Unterstützen einer elektrischen Parkbremse eines Fahrzeugs gemäß Oberbegriff des Patentanspruchs 1.

Aus der DE 102008051350 A1 ist eine kombinierte Fahrzeugbremse bekannt, die eine hydraulisch betätigbare Betriebsbremse und eine elektromechanisch betätigbare Parkbremse, auch Feststellbremse genannt, aufweist, wobei in einem Bremsgehäuse ein hydraulischer Betriebsdruckraum von einem Bremskolben begrenzt ist, der einerseits zur Durchführung von Betriebsbremsungen mit hydraulischem Druckmittel beaufschlagbar ist und andererseits zur Erzielung einer Parkbremsung entlang einer Kolbenlängsachse mittels eines selbsthemmenden Getriebes betätigbar ist, welches die Rotationsbewegung eines Elektromotors zur Durchführung des Feststellbremsvorganges in eine Translationsbewegung des Bremskolbens umsetzt und den Bremskolben in der betätigten Stellung durch die Selbsthemmung des Getriebes hält.

Ferner umfasst ein solches Parkbremssystem ein elektronisches Steuergerät, das in der Regel dem Fahrdynamiksteuergerät (ESC-Steuergerät) den Kraftfahrzeugs entspricht und die bekannten hydraulischen und elektrischen Komponenten enthält sowie zusätzlich zwei Vollbrücken zur unabhängigen Ansteuerung von zwei Gleichstrommotoren der beiden Parkbremsen an den Hinterrädern des Kraftfahrzeugs.

Mit einem solchen Parkbremssystem sind Kunden- und Sicherheitsanforderungen hinsichtlich Preis, Leistung, Geräusch, Sicherheit, Verfügbarkeit und Komfort zu realisieren, die oft widersprüchlich sind.

Daher muss die Auslegung solcher Systeme so gewählt werden, dass unter normalen Umgebungsbedingungen, bspw. hinsichtlich Bordnetzspannung und Temperatur die Elektromotoren der Parkbremse die erforderliche Zuspannkraft, die einen Mindestwert erreichen muss, sicher aufbringen kann. Hierzu wird aus Kostengründen die Zuspannkraft nicht direkt gemessen, sondern wird aus anderen die Zuspannkraft repräsentierenden Parametern indirekt bestimmt. So wird bspw. zum Zuspannen der oben beschriebenen elektrischen Parkbremse ein vorbestimmter Maximal- oder Abschaltstrom des Elektromotors als Abschaltkriterium verwendet, bei dem angenommen wird, dass die gewünschte Zuspannkraft diesen Grenzwert als Kraftsollwert erreicht ist.

Dieses Verfahren gewährleistet jedoch nicht in allen Situationen, dass ein sicheres Abstellen des Fahrzeugs gewährleistet ist, da bspw. bei erhöhter Temperatur und/oder niedriger Betriebsspannung der gewünschte Abschaltstrom nicht mehr erreicht wird.

Zur Lösung dieses Problems ist es bspw. aus der DE 10 2010 029 391 A1 bekannt, die Hydraulik des Fahrzeugs unterstützend für das Erreichen der erforderlichen Zuspannkraft heranzuziehen. Hierfür wird vor dem Zuspannvorgang an der Parkbremse anhand vorliegender Temperaturwerte an den Bremsaktuatoren und anhand von Beschleunigungswerten der Räder entschieden, ob eine hydraulische Unterstützung erforderlich ist. Gemäß dem bekannten Verfahren nach der DE 10 2010 029 391 A1 wird der hydraulische Unterstützungsbremsdruck dadurch erzeugt, dass bei einer Betätigung der Parkbremse zunächst Druckmittel den Vorderradbremsen entnommen und zum Aufbau eines Unterstützungsbremsdrucks in die Parkbremsen an den Hinterrädern transferiert wird und erst anschließend ein Zuspannen der Parkbremse durchgeführt wird.

Bei diesem bekannten Verfahren der hydraulischen Unterstützung der Parkbremsenfunktion muss vor dem Zuspannen der Parkbremse entschieden werden, ob eine hydraulische Unterstützung erforderlich ist. Dies führt zu dem Nachteil, dass zu häufig eine hydraulische Unterstützung durchgeführt wird, obwohl es nicht erforderlich gewesen wäre. Ein solches Verhalten stellt eine wesentliche Komforteinbuße für den Fahrer dar.

Dokument US 2006/267402 A1 offenbart ein Verfahren nach dem Oberbegriff des Anspruchs 1.

Die Aufgabe der Erfindung besteht darin, ein Verfahren zum hydraulischen Unterstützen einer elektrischen Parkbremse eines Fahrzeugs der eingangs genannten Art anzugeben, mit dem die genannten Nachteile vermieden werden können.

Diese Aufgabe wird gelöst durch ein Verfahren mit den Merkmalen des Patentanspruchs 1.

Dieses erfindungsgemäße Verfahren zum hydraulischen Unterstützen einer wenigstens einen Bremsaktuator aufweisenden elektrischen Parkbremse eines Fahrzeugs, welches zur elektrischen und hydraulischen Betätigung des wenigstens einen Bremsaktuators eine hydraulische Betriebsbremsenfunktion und eine elektrische Parkbremsenfunktion aufweist, wobei sich eine mit der Parkbremsenfunktion elektrisch erzeugte Zuspannkraft mit einer durch Beaufschlagung des Bremsaktuators mit einem von der Betriebsbremsenfunktion zur Verfügung gestellten hydraulischen Unterstützungsbremsdruck erzeugten Unterstützungsbremskraft überlagert, zeichnet sich erfindungsgemäß dadurch aus, dass bei einer Betätigung der Parkbremse zur Erzeugung einer vorgegebenen Zuspannkraft die von dem Bremsaktuator erzeugte Zuspannkraft mittels einer deren Wert repräsentierenden Messgröße als Istwert erfasst wird, bei einem Istwert der Messgröße, der kleiner als ein einen ersten Kraftsollwert der Zuspannkraft repräsentierenden ersten Sollwert ist, der Bremsaktuator mit einem hydraulischen Unterstützungsbremsdruck beaufschlagt wird, der einem vorgegebenen Unterstützungsbremsdrucksollwert entspricht, und mittels der Parkbremsenfunktion eine Nachspannfunktion zum Nachspannen des mit dem hydraulischen Unterstützungsbremsdruck beaufschlagten Bremsaktuators zur Erreichung der vorgegebenen Zuspannkraft durchgeführt wird.

Mit diesem erfindungsgemäßen Verfahren wird nur dann eine hydraulische Unterstützung durchgeführt bzw. angefordert, wenn es tatsächlich notwendig ist, also der Istwert der die Zuspannkraft repräsentierenden Messgröße, die vorzugsweise der Motorstrom der Elektromotoren der Parkbremse darstellt, einen einem ersten Kraftsollwert entsprechenden Abschaltstromwert bzw. Grenzstromwert als Sollwert nicht erreicht. Außerdem ist der energetische Aufwand zur Erzeugung des hydraulischen Unterstützungsbremsdruckes gering, da der Bremskolben durch die Parkbremsenfunktion bereits in die Nähe der gewünschten Endposition gefahren wurde.

Zur Erzeugung des hydraulischen Unterstützungsbremsdruckes wird in naheliegender Weise als Druckerzeugungsmittel eine Hydraulikpumpe eingesetzt, die mittels der Betriebsbremsenfunktion angesteuert wird. Da der Bremskolben des Bremsaktuators bereits in die Nähe seiner Endposition mittels der Parkbremsenfunktion gefahren wurde, bleibt das von der Hydraulikpumpe zu fördernde Volumen klein, d. h. der Energieverbrauch der Hydraulikpumpe ist gering.

In einer Ausgestaltung der Erfindung wird der Unterstützungsbremsdrucksollwert auf einen Wert eingestellt, bei dem die dadurch bewirkte Unterstützungsbremskraft dem ersten Kraftsollwert, also der erforderlichen Zuspannkraft entspricht, wobei nach der Erzeugung des dem Kraftsollwert entsprechenden Unterstützungsbremsdruckes das Druckerzeugungsmittels abgeschaltet und der an dem Bremsaktuator anliegende Unterstützungsbremsdruck hydraulisch in dem Bremsaktuator eingeschlossen wird. Damit wird der Bremskolben des Bremsaktuators mit diesem dem gewünschten Endwert der Zuspannkraft entsprechenden Unterstützungsbremsdruck beaufschlagt, um damit das Nachspannen durchführen zu können.

Dieses anschließende Nachspannen der Parkbremse erfolgt gemäß einer weiteren Ausgestaltung der Erfindung durch Ansteuern des mit dem eingeschlossenen Unterstützungsbremsdruck beaufschlagten Bremsaktuators mittels der Parkbremsenfunktion, bis der Istwert der Messgröße der Zuspannkraft einem Sollwert entspricht, der kleiner als der dem ersten Kraftsollwert entsprechende erste Sollwert ist. Dabei kann dieser Sollwert so gewählt werden, dass eine geringfügige Bewegung des Bremskolbens des Bremsaktuators ausgelöst wird, d. h. der für den Antrieb des Bremsaktuators vorgesehene Elektromotor einige Drehungen ausführt. Durch dieses geringfügige Ansteuern des Bremsaktuators wird ein schnelles und leichtgängiges Beifahren des Bremsaktuators an die Bremsscheiben erzielt.

Gemäß einem weiteren Ausgestaltung der Erfindung entspricht der Unterstützungsbremsdrucksollwert einem Vordrucksollwert, bei dem die dadurch bewirkte Unterstützungsbremskraft kleiner als der erste Kraftsollwert ist, wobei nach der Erzeugung des Unterstützungsbremsdruckes das Druckerzeugungsmittel nicht abgeschaltet wird, so dass der Bremsaktuator weiterhin mit dem erzeugten Unterstützungsbremsdruck beaufschlagt wird. Weiterbildungsgemäß wird anschließend zum Nachspannen der Parkbremse mittels der Parkbremsenfunktion eine Wegregelung aktiviert, indem anhand einer gespeicherten Weg-Kraft-Kenn-linie der mit dem Unterstützungsbremsdruck beaufschlagte Bremskolben des Bremsaktuators auf eine der vorgegebene Zuspannkraft entsprechenden Soll-Position eingeregelt wird. Falls bei diesem Nachspannen der Parkbremse die Soll-Position mit dem Bremskolben durch Ermitteln von dessen Ist-Position nicht erreicht wird, wird eine Fehlermeldung für den Fahrzeugführer erzeugt.

Anstelle der Wegregelung kann das Nachspannen der Parkbremse gemäß einer Ausgestaltung der Erfindung auch durchgeführt werden, indem während des Nachspannens des Bremsaktuators mittels der Parkbremsenfunktion der Istwert der Messgröße erfasst wird, die die von dem Bremsaktuator erzeugte Zuspannkraft repräsentiert, und das Nachspannen beendet wird, wenn der Istwert der Messgröße einen einem zweiten Kraftsollwert entsprechenden zweiten Sollwert erreicht, wobei der zweite Kraftsollwert gegenüber dem ersten Kraftsollwert um einen dem Unterstützungsbremsdruck entsprechenden Kraftwert reduziert ist. Vorzugsweise wird auch bei dieser Ausführungsform eine Fehlermeldung erzeugt, wenn der Istwert der Messgröße den zweiten Sollwert nicht erreichen sollte.

In vorteilhafter Weise kann vor Durchführung des Nachspannens mittels des zweiten Sollwertes der Messgröße der mit dem Unterstützungsbremsdruck beaufschlagte Bremsaktuator mittels einer Wegregelung um einen kleinen Wegbetrag in Löserichtung der Parkbremse gesteuert werden, um damit eine definierte Position für das anschließende Nachspannen zu erhalten.

Gemäß einer vorteilhaften Weiterbildung der Erfindung wird nach Durchführung der Nachspannfunktion der hydraulische Unterstützungsbremsdruck abgebaut.

Zur Durchführung der Parkbremsenfunktion wird der Bremsaktuator von einem Elektromotor angetrieben, so dass es sich anbietet, als die Zuspannkraft repräsentierende Messgröße den Motorstrom des Elektromotors zu detektieren.

Im Folgenden wird das erfindungsgemäße Verfahren unter Bezugnahme auf die beigefügten Figuren näher erläutert und beschrieben werden. Es zeigen:
- Figur 1: ein schematisches Blockschaltbild eines Bremssystems zur Durchführung des erfindungsgemäßen Verfahrens,
- Figur 2: ein schematisches Ablaufdiagramm zur Erläuterung eines ersten Ausführungsbeispiels der Erfindung,
- Figur 3: ein schematisches Ablaufdiagramm zur Erläuterung eines zweiten Ausführungsbeispiels der Erfindung, und
- Figur 4: ein schematisches Ablaufdiagramm zur Erläuterung eines dritten Ausführungsbeispiels der Erfindung.

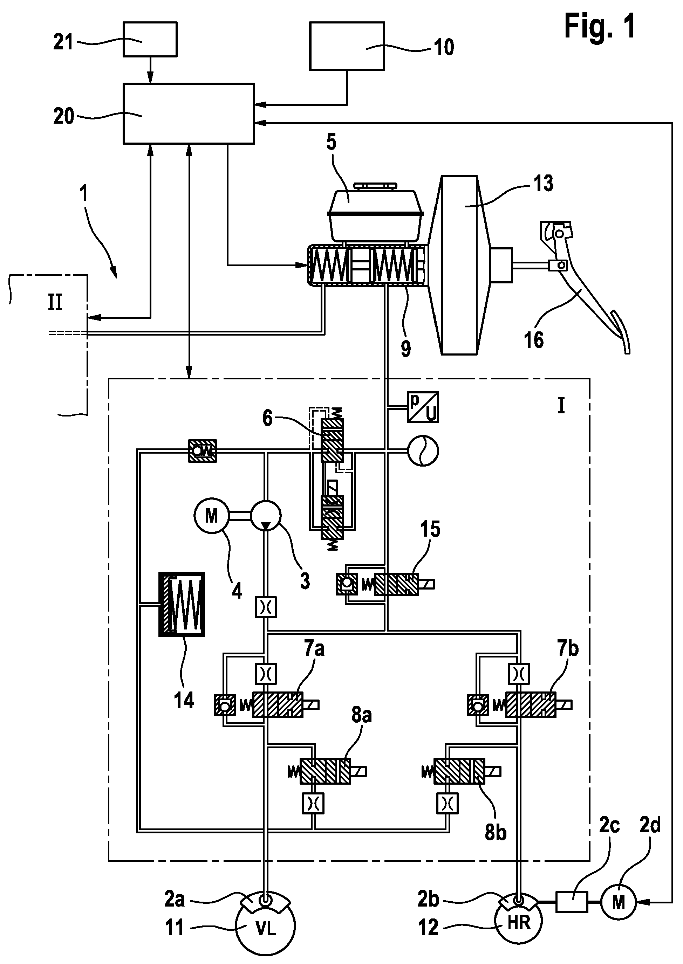

Die Figur 1 zeigt eine Bremsanlage 1 eines Kraftfahrzeugs mit einem Steuergerät 20 eines Fahrdynamikregelungssystems (ESC-System), dem Sensordaten einer ESC-Sensor 21 und Zustandssignale eines Parkbremsschalters 10 zugeführt werden, wobei mit diesem Parkbremsschalter 10 das Zuspannen oder Lösen einer Parkbremse durch den Fahrer des Kraftfahrzeugs initiiert werden kann. Hierzu führt das Steuergerät 20 neben einer Betriebsbremsenfunktion mittels der Bremsanlage zusätzlich eine Parkbremsenfunktion durch Ansteuerung von im nachfolgenden erläuterten Komponenten einer Parkbremse aus.

Das Steuergerät 20 steuert eine Bremsanlage 1, wobei die Figur 1 nur einen an einen Bremszylinder (Tandem-Hauptzylinder) 9 angeschlossenen Bremskreis I für ein vorderes linkes Rad 11 und ein hinteres rechtes Rad 12 zeigt; ein zweiter Bremskreis II ist entsprechend aufgebaut und ebenfalls an den Bremszylinder 9 angeschlossen und nur andeutungsweise dargestellt. An den Bremskreis I sind Radbremsen der Räder 11 und 12 mit einem Bremssattel 2a bzw. 2b jeweils über eine Hydraulikleitung angeschlossen, wobei die hinteren Räder 12 jeweils als Parkbremse mit einem Bremsaktuator 2c ausgebildet sind, die von Gleichstrommotoren 2d unabhängig von einer hydraulischen Druckbeaufschlagung betätigt werden.

Zur Durchführung der Parkbremsenfunktion ist das Steuergerät 20 mit den Bremsaktuatoren 2c verbunden, um die Gleichstrommotoren 2d anzusteuern. Über ein Getriebe wird die Drehbewegung der Gleichstrommotoren 2d in eine lineare Bewegung eines Bremskolbens des Bremsaktuators 2c umgesetzt, so dass das Drehmoment des Gleichstrommotors 2d als Zuspannkraft F über den Bremskolben auf den Bremssattel 2b wirkt. Nach dem Abschalten des Motorstromes I bleibt aufgrund einer Selbsthemmung des Getriebes die erzeugte Zuspannkraft F bestehen.

Die Zuspannkraft F selbst wird nicht gemessen. Beim Zuspannen der Parkbremse wird der Gleichstrommotor 2d in Richtung Zuspannen, das heißt beispielsweise durch das Steuergerät 20 mit einer positiven anliegenden Spannung, über eine H-Brücke angetrieben. Nach dem Anlaufen des Motors sinkt der Strom schnell auf einen Minimalwert, den sogenannten Leerlaufstrom, während sich die Maximaldrehzahl einstellt. Nachdem die Beläge zur Anlage an der Bremsschreibe gekommen sind, d. h. nach Überwindung des Luftspiels, baut sich eine Kraft auf und der Strom steigt an. Nun wird der Bremskolben des Bremsaktuators so lange durch den Gleichstrommotor 2d angetrieben, bis ein vorgegebener, definierter Sollwert Iₛₒₗₗ des Motorstromes I als Istwert Iᵢₛₜ erreicht bzw. überschritten wird. Dann ist die dem entsprechenden Stromwert Iₛₒₗₗ zugeordnete Zuspannkraft Fₛₒₗₗ erreicht und der Gleichstrommotor 2d abgeschaltet.

Zur Einstellung der erforderlichen Zuspannkraft Fₛₒₗₗ wird der Motorstrom I des Gleichstrommotors 2d gemessen und die an den Gleichstrommotor angelegte Spannung über das Steuergerät 20, die mit einer nicht dargestellten H-Brücke verbunden ist, entsprechend der erforderliche Richtung, je nachdem ob ein Zuspannen oder ein Lösen erfolgen soll, festgelegt. Sobald ein definierter Sollwert Iₛₒₗₗ des Motorstromes I als Istwert Iᵢₛₜ erreicht bzw. überschritten wird, wird der Gleichstrommotor 2d abgeschaltet. Dieser Sollwert entspricht dabei der erforderlichen Zuspannkraft Fₛₒₗₗ.

Diese Sollwerte Iₛₒₗₗ des Motorstroms I werden dadurch ermittelt, dass die Eigenschaften der Bremsaktuatoren 2c experimentell vermessen werden und die entsprechenden als Sollwerte Iₛₒₗₗ verwendeten Stromwerte in einem Kennfeld des Steuergerätes 20 gespeichert werden.

Auch die Position des Bremskolbens des Bremsaktuators 2c bzw. die Drehzahl des Gleichstrommotors 2d wird ebenfalls nicht direkt erfasst, sondern mittels eines Modells geschätzt.

Die Bremsanlage 1 weist einen mit dem Bremszylinder 9 verbundenen Bremskraftverstärker 13 und einen Vorratsbehälter 5 für die Bremsflüssigkeit bzw. die Hydraulikflüssigkeit auf. Der Bremszylinder 9 erzeugt auslassseitig einen Bremsdruck entsprechend eines mit dem Bremskraftverstärker 13 verbundenen Bremspedals 16, das von einem Fahrer betätigt wird. Dieser Bremsdruck wird über ein geöffnetes Trennventil 15 jeweils einem offenen Einlassventil 7a bzw. 7b einlassseitig zugeführt, damit sich ein entsprechender hydraulischer Bremsdruck an den Rädern 11 und 12 mittels der Bremssättel 2a und 2b aufbauen kann. Die beiden Einlassventile 7a und 7b sind stromlos offen. Der Bremskraftverstärker 13 mit dem Hauptbremszylinder 9 ist mit dem Steuergerät 20 verbunden.

Ein stromlos geschlossenes Auslassventil 8a bzw. 8b verbindet die Bremssättel 2a bzw. 2b mit einem Niederdruckspeicher 14, der seinerseits mit einer Hydraulikpumpe 3 ansaugseitig verbunden ist und über ein Umschaltventil 6 mit dem Hauptbremszylinder 9 verbunden werden kann.

Die Hydraulikpumpe 3 ist für die Bremssättel 2a und 2b vorgesehen, um bspw. im Falle eines ABS- oder ESC- Eingriffs das bei einem Druckabbau in den Niederdruckspeicher 14 verschobene Bremsmedium wieder heraus zu fördern bzw. um bei einer Auslösung der Parkbremse an den hinteren Rädern 12 einen hydraulischen Unterstützungsbremsdruck Pᵤ zu erzeugen, falls die erforderliche Zuspannkraft F_{e,soll} nicht erzeugt werden kann. Mit diesem hydraulischen Unterstützungsbremsdruck Pᵤ wird der Bremskolben des Bremsaktuators 2c beaufschlagt und überlagert sich mit der mittels des Gleichstrommotors 2d elektrisch erzeugten Zuspannkraft Fₑ.

Die Hydraulikpumpe 3 wird durch einen Elektromotor 4 angetrieben, der seinerseits von dem Steuergerät 20 pulsweitenmoduliert (PWM) angesteuert wird. Dabei wird der Elektromotor 4 derart angesteuert, dass die Hydraulikpumpe 3 durch ansaugseitiges Ansaugen von Bremsflüssigkeit einen Bremsdruck auf der Hochdruckseite aufbauen kann.

Damit bei der Ansteuerung der Hydraulikpumpe 3 im Schrittmotorbetrieb Bremsflüssigkeit aus der Druckkammer des Bremssattels 2a bzw. 2b abgesaugt werden kann, ist das Umschaltventil 6 und das Einlassventil 7a bzw. 7b geschlossen, während das Auslassventil 8a bzw. 8b zur Herstellung der Verbindung zur Druckkammer geöffnet ist.

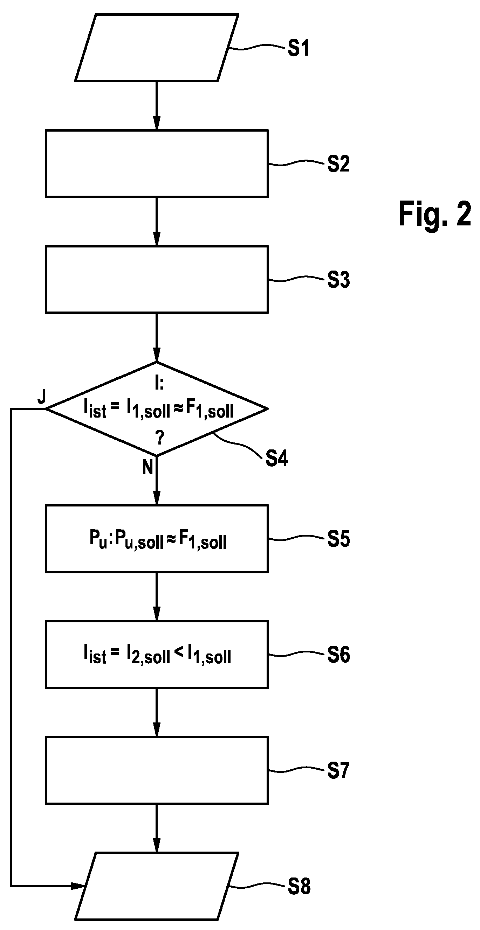

Ein erstes Ausführungsbeispiel der Erfindung wird nachfolgende in Verbindung mit dem Ablaufdiagramm nach Figur 2 und dem Bremssystem gemäß Figur 1 beschrieben. Wobei sich die auf den Bremskreis I bezogene Beschreibung auf auch den Bremskreis II bezieht.

Nach dem Start (Schritt S1: "Start") des Verfahrens und der Detektion eines geschossenen Parkbremsschalters 10 durch das Steuergerät 20 gemäß Schritt S2 ("Parkbremse geschlossen") erfolgt mit Schritt S3 ein Zuspannen des Bremssattels 2b an dem Hinterrad 12, indem das Steuergerät 20 mittels der Parkbremsenfunktion den Gleichstrommotor 2d entsprechend ansteuert. Die erforderliche Zuspannkraft F_{1,soll} entspricht einem vorgegebenen Sollwert I_{1,soll} des Motorstroms des Gleichstrommotors 2d (I_{1,soll} ≈ F_{1,soll}). Daher wird in Schritt S4 der Istwert Iᵢₛₜ des Motorstroms I erfasst und mit dem Sollwert I_{1,soll} verglichen. Wird dieser Sollwert I_{1,soll} von dem Istwert Iᵢₛₜ erreicht oder überschritten, ist mit Schritt S8 ("Ende") das Verfahren beendet.

Im anderen Fall fordert das Steuergerät 20 eine hydraulische Unterstützung an, d. h. es wird gemäß Schritt S5 ("Erzeugung von Pᵤ") mittels der Betriebsbremsenfunktion ein hydraulischer Unterstützungsdruck Pᵤ von der Hydraulikpumpe 3 erzeugt, mit dem der Bremskolben des Bremsaktuators 2c beaufschlagt wird. Der Sollwert P_{u,soll} des zu erzeugenden Unterstützungsdrucks Pᵤ entspricht dabei der erforderlichen Zuspannkraft F_{1,soll}. Der Unterstützungsbremsdruck Pᵤ entsprechend des Sollwertes P_{u,soll} wird nur an den Parkbremsen der Hinterräder 12 aufgebaut. Hierzu wird das Einlassventil 7b geöffnet und das Auslassventil 7a des Bremssattels 2a am Vorderrad 11 geschlossen, das Auslassventile 8b des Bremssattels 2b des Hinterrads 12 bleiben ebenso geschlossen. Nach diesem Druckaufbau an den Parkbremsen wird dieser hydraulische Unterstützungsbremsdruck Pᵤ in dem Bremsaktuator 2c eingeschlossen, indem das Einlassventil 7b geschlossen wird. Anschließend wird die Hydraulikpumpe 3 abgeschaltet.

Anschließend folgt mit Schritt S6 ein Nachspannen des Bremssattels 2b der Parkbremse, indem der Gleichstrommotor 2d so lange angesteuert wird, bis dessen Motorstrom I einen Sollwert I_{2,soll} erreicht, der gegenüber dem ersten Sollwert I_{1,soll} kleiner ist. Dieser zweite Sollwert I_{2,soll} wird so gewählt, dass eine geringe Drehbewegung des Gleichstrommotors 2d erzielt wird, so dass dadurch unter der Wirkung des eingesperrten Unterstützungsbremsdrucks Pᵤ ein leichtes Beifahren des Bremskolbens des Bremsaktuators 2c an den Bremssattel 2b bewirkt wird. Die aufgebaute Zuspannkraft F bleibt aufgrund des selbsthemmenden Getriebes auch nach dem Öffnen der Ventile 7b und 8b zwecks Abbau des Drucks gemäß Schritt S7 ("Abbauen von Pᵤ) erhalten.

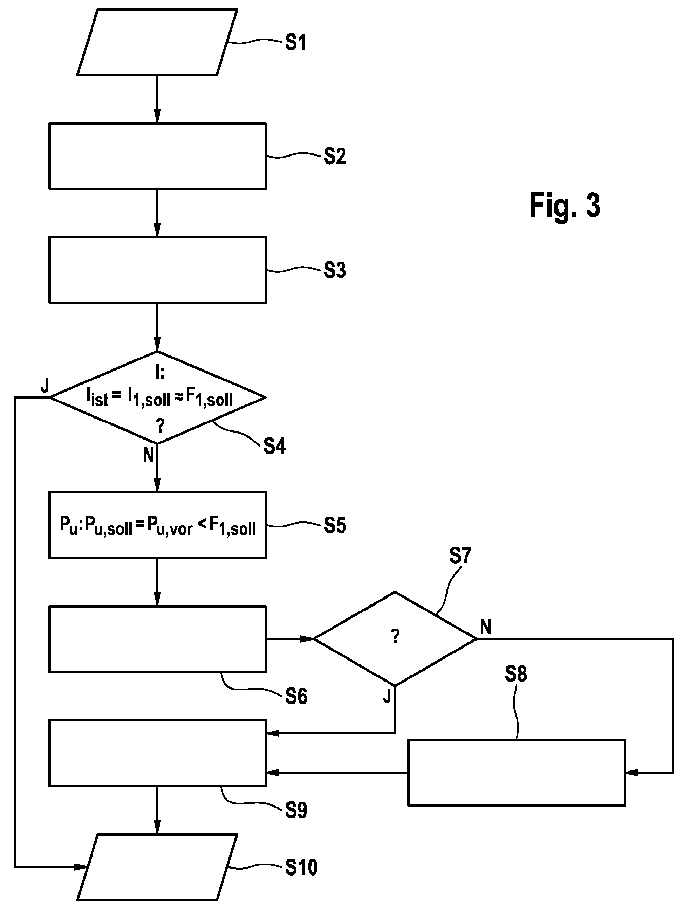

Das zweite Verfahren zum hydraulischen Unterstützen der elektrischen Parkbremse der Hinterräder 12 beginnt gemäß Figur 3 mit Schritten S1 bis S4, die denjenigen nach Figur 2 entsprechen. Wenn gemäß Schritt S4 der Istwert Iᵢₛₜ des Motorstroms den dem Kraftsollwert F_{1,soll} entsprechenden Sollwert I_{1,soll} nicht erreicht, also die erforderliche Zuspann-kraft F_{1,soll} sich nicht einstellt, wird ebenfalls von dem Steuergerät 20 eine hydraulische Unterstützung angefordert. Hierzu wird nach Schritt S5 (Erzeugung von Pᵤ) mittels der Hydraulikpumpe 3 ein hydraulischer Unterstützungsbremsdruck Pᵤ mit einem Solldruck P_{u,soll} erzeugt, der einem Vordrucksollwert P_{u,vor} entspricht, dessen Wert kleiner als der Kraftsollwert F_{1,soll} ist. Bei einem Kraftsollwert F_{1,soll} von bspw. 140 bar, kann als Vordrucksollwert P_{u,vor} bspw. 80 bar gewählt werden.

Der Unterstützungsbremsdruck Pᵤ entsprechend des Vordruck-Sollwertes P_{u,vor} wird nur an den Bremskolben der Bremsaktuatoren 2c der Hinterräder 12 aufgebaut. Die Hydraulikpumpe 3 läuft weiter.

Das Nachspannen wird mit dem nachfolgenden Schritt S6 ("Nachspannen mit Wegregelung auf Soll-Position des Bremskolbens") durchgeführt, indem die mit dem hydraulischen Bremsdruck Pᵤ beaufschlagten Bremskolben der Bremsaktuatoren 2c an den Hinterrädern 12 mittels einer Wegregelung unter Verwendung einer in dem Steuergerät 20 abgelegten Weg-KraftKennlinie auf eine Position gefahren werden, die der erforderlichen Zuspannkraft, also dem Kraftsollwert F_{1,soll} entspricht.

Hierbei geht man von der am Ende des Zuspannvorgangs gemäß Schritt S3 vorliegenden Position aus. Die Wegregelung verwendet ausgehend hiervon einen Positionssollwert, der einen geringfügig größeren Wert aufweist als die Position am Ende des Zuspannvorgangs. Bei dieser Soll-Position wird davon ausgegangen, dass der Bremssattel 2b mit einer entsprechend größeren Kraft zugespannt wird. Der Wegregler versucht beim Nachspannen, den Bremskolben des Bremsaktuators 2c in Zuspannrichtung auf die Soll-Position einzustellen. Mit dem Erreichen dieser Soll-Position wird nach Schritt S7 ("Soll-Position erreicht") der hydraulische Unterstützungsbremsdruck Pᵤ in Schritt S9 ("Abbauen von Pᵤ) abgebaut, d. h. die Hydraulikpumpe 3 abgestellt. Im anderen Fall, also bei Nichterreichen der Soll-Position, wird in Schritt S8 ("Fehlermeldung anzeigen") eine Fehlermeldung zur Anzeige an den Fahrer erzeugt und ebenso mit Schritt S9 der Unterstützungsbremsdruck Pᵤ abgebaut.

Die beiden im Zusammenhang mit den Figuren 2 und 3 erläuterten Verfahren zum hydraulischen Unterstützen der elektrischen Parkbremse weisen den Vorteil auf, dass nur dann die hydraulische Unterstützung angefordert bzw. durchgeführt wird, wenn es auch tatsächlich erforderlich ist. Ferner ist das von der Hydraulikpumpe 3 zu erzeugte Volumen an Druckmittel sehr gering, da aufgrund des von der Parkbremsenfunktion durchgeführten Zuspannvorgangs gemäß Schritt S3 der Bremskolben der Bremsaktuatoren 2c bereits in die Nähe der erforderlichen Endposition gefahren wurden, bevor der hydraulische Unterstützungsbremsdruck wirkt.

Ein weiterer Vorteil besteht darin, dass diese beschriebenen Verfahren auch zum Nachspannen einer heißgelaufenen Parkbremse während der Abkühlphase einsetzbar sind.

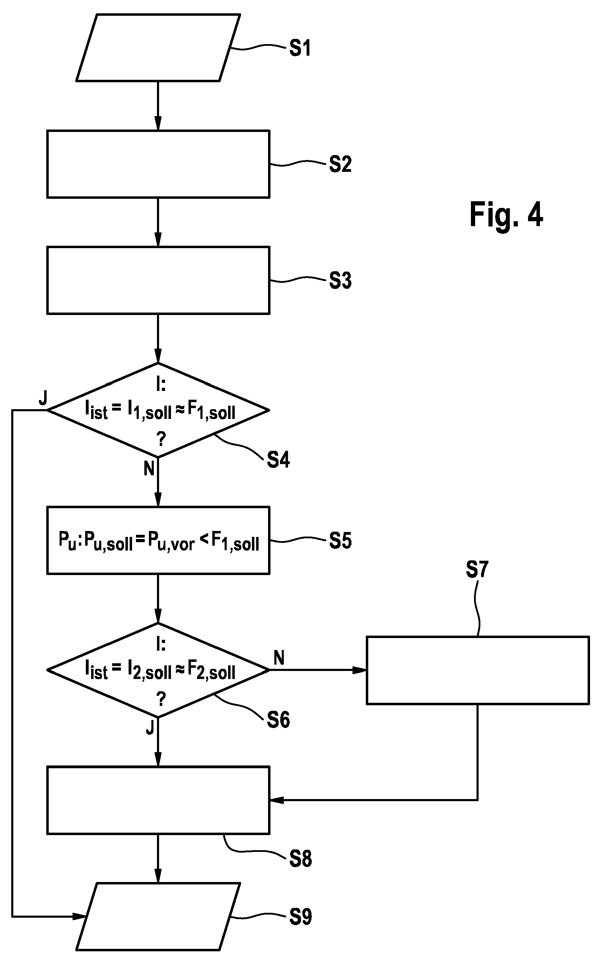

Das letzte Ausführungsbeispiel eines Verfahrens zum hydraulischen Unterstützen der elektrischen Parkbremse nach Figur 4 unterscheidet sich von demjenigen nach Figur 3 durch die angewendete Nachspannfunktion.

Für die Nachspannfunktion wird in Schritt S6 ein Sollwert I_{2,soll} für den Motorstrom I der Gleichstrommotoren 2d verwendet, der einem zweiten Kraftsollwert F_{2,soll} entspricht, welcher gegenüber dem in den Schritten S3 und S4 verwendeten ersten Kraftsollwert F_{1,soll} um einen dem Unterstützungsbremsdruck P_{u,vor} entsprechenden Kraftwert reduziert ist. Der mit diesem Unterstützungsbremsdruck P_{u,vor} beaufschlagte Bremskolben des Bremsaktuators 2c wird nun mittels des Gleichstrommotors 2d von dem Steuergerät 20 so lange zugespannt, bis der Istwert Iᵢₛₜ des Motorstroms I den Sollwert I_{2,soll} erreicht oder überschreitet; anschließend wird der Gleichstrommotor 2d abgeschaltet.

Dieser reduzierte Kraftsollwert I_{2,soll} wird ebenso aus einem in dem Steuergerät 20 abgelegten Kennfeld entnommen. Solche Kennfelder werden für bestimmte hydraulische Vordrucke, die am Bremskolben des Bremsaktuators 2c anliegen, ermittelt. Für hydraulische Vordrucke, die zwischen den Werten liegen, für die Kennfelder existieren, kann der entsprechende Sollwert 1_{2,soll} für den Motorstrom I interpoliert werden.

Bei Nichterreichen dieses Sollwertes I_{2,soll} durch den Motorstrom I, wird gemäß Schritt S7 ("Fehlermeldung anzeigen") eine Fehlermeldung an den Fahrer erzeugt, nach Abbau des hydraulischen Unterstützungsbremsdruckes Pᵤ gemäß Schritt S8 (Abbauen von Pᵤ) ist das Verfahren beendet (Schritt S9: "Ende").

Vor dem Nachspannen der Parkbremse gemäß Schritt S6 kann zunächst der mit dem Unterstützungsbremsdruck Pᵤ beaufschlagte Bremsaktuator 2c mittels einer Wegregelung um einen kleinen Wegbetrag in Löserichtung der Parkbremse gesteuert werden, um damit eine definierte Position für das anschließende Nachspannen zu erhalten.

Auch das zuletzt beschriebene Verfahren gemäß Figur 4 weist den Vorteil auf, dass nur dann eine hydraulische Unterstützung durchgeführt wird, wenn dies tatsächlich erforderlich ist. Ebenso ist das für den hydraulischen Unterstützungsdruck von der Hydraulikpumpe 3 zu fördernde Volumen gering, da der Bremskolben des Bremsaktuators 2d bereits in der Nähe der erforderlichen Endposition gemäß den Schritten S3 und S4 gefahren wurde.

### Bezugszeichen:

- 1: hydraulische Bremsanlage
- 2a: Bremssattel des linken Vorderrades 11,
- 2b: Bremssattel mit Parkbremse des rechten Hinterrades 12,
- 2c: Bremsaktuator am rechten Hinterrad 12
- 2d: Elektromotor, Gleichstrommotor des Bremsaktuators 2c
- 3: Hydraulikpumpe
- 4: Elektromotor für Antrieb der Hydraulikpumpe
- 5: Vorratsbehälter
- 6: Umschaltventil
- 7a: Einlassventil für Bremssattel 2a
- 7b: Einlassventil für Bremssattel 2b
- 8a: Auslassventil für Bremssattel 2a
- 8b: Auslassventil für Bremssattel 2b
- 9: Hauptbremszylinder

- 10: Parkbremsschalter
- 11: Vorderes linkes Rad
- 12: Hinteres rechtes Rad
- 13: Bremskraftverstärker
- 14: Niederdruckspeicher
- 15: Trennventil
- 16: Bremspedal

- 20: ESC-Steuergerät
- 21: ESC-Sensorik

- I: erster Bremskreis
- II: zweiter Bremskreis

## Patentansprüche

1. Verfahren zum hydraulischen Unterstützen einer wenigstens einen Bremsaktuator (2c,2d) aufweisenden elektrischen Parkbremse eines Fahrzeugs, welches zur elektrischen und hydraulischen Betätigung des wenigstens einen Bremsaktuators (2c,2d) eine hydraulische Betriebsbremsenfunktion und eine elektrische Parkbremsenfunktion aufweist, wobei sich eine mit der Parkbremsenfunktion elektrisch erzeugte Zuspannkraft (F) mit einer durch Beaufschlagung des Bremsaktuators (2c,2d) mit einem von der Betriebsbremsenfunktion zur Verfügung gestellten hydraulischen Unterstützungsbremsdruck (Pᵤ) erzeugten Unterstützungsbremskraft überlagert,
wobei
- bei einer Betätigung der Parkbremse zur Erzeugung einer vorgegebenen Zuspannkraft die von dem Bremsaktuator (2c, 2d) erzeugte Zuspannkraft mittels einer deren Wert repräsentierenden Messgröße (I) als Istwert (Iᵢₛₜ) erfasst wird,
**dadurch gekennzeichnet, dass**
- wenn der Istwert (Iᵢₛₜ) der Messgröße (I) den einen ersten Kraftsollwert (F_{1,soll}) der Zuspannkraft repräsentierenden ersten Sollwert (I_{1,soll}) nicht erreicht, der Bremsaktuator (2c, 2d) mit einem hydraulischen Unterstützungsbremsdruck (Pᵤ) beaufschlagt wird, der einem vorgegebenen Unterstützungsbremsdrucksollwert (P_{u,soll}) entspricht, und
- mittels der Parkbremsenfunktion eine Nachspannfunktion zum Nachspannen des mit dem hydraulischen Unterstützungsbremsdruck (Pᵤ) beaufschlagten Bremsaktuators (2c, 2d) zur Erreichung der vorgegebenen Zuspannkraft durchgeführt wird.

2. Verfahren nach Anspruch 1, **dadurch gekennzeichnet, dass** zur Erzeugung des hydraulischen Unterstützungsbremsdruckes (Pᵤ) ein Druckerzeugungsmittel (3), vorzugsweise eine Hydraulikpumpe mittels der Betriebsbremsenfunktion angesteuert wird.

3. Verfahren nach Anspruch 2,
**dadurch gekennzeichnet, dass**
- der Unterstützungsbremsdrucksollwert (P_{u,soll}) auf einen Wert eingestellt wird, bei dem die dadurch bewirkte Unterstützungsbremskraft dem ersten Kraftsollwert (F_{1,soll}) entspricht,
- nach der Erzeugung des dem Kraftsollwert (F_{1,soll}) entsprechenden Unterstützungsbremsdruckes (Pᵤ) das Druckerzeugungsmittels (3) abgeschaltet wird, und
- der an dem Bremsaktuator (2c, 2d) anliegende Unterstützungsbremsdruck (Pᵤ) hydraulisch in dem Bremsaktuator (2c, 2d) eingeschlossen wird.

4. Verfahren nach Anspruch 2,
**dadurch gekennzeichnet, dass**
- der Unterstützungsbremsdrucksollwert (P_{u,soll}) einem vorgegebenen Vordrucksollwert (P_{u,vor}) entspricht, wobei die dadurch bewirkte Unterstützungsbremskraft kleiner als der erste Kraftsollwert (F_{1,soll}) ist, und
- nach der Erzeugung des Unterstützungsbremsdruckes (Pᵤ) das Druckerzeugungsmittel (3) nicht abgeschaltet wird und der Bremsaktuator (2c, 2d) weiterhin mit dem erzeugten Unterstützungsbremsdruck (Pᵤ) beaufschlagt wird.

5. Verfahren nach Anspruch 3,
**dadurch gekennzeichnet, dass**
zum Nachspannen der Parkbremse der Bremsaktuator (2c, 2d) mit dem eingeschlossenen Unterstützungsbremsdruck (Pᵤ) mittels der Parkbremsenfunktion angesteuert wird, bis der Istwert (Iᵢₛₜ) der Messgröße (I) der Zuspannkraft einem Sollwert (I_{2,soll}) entspricht, der kleiner als der dem ersten Kraftsollwert (F_{1,soll}) entsprechende erste Sollwert (I_{1,soll}) ist.

6. Verfahren nach Anspruch 4,
**dadurch gekennzeichnet, dass**
zum Nachspannen der Parkbremse mittels der Parkbremsenfunktion eine Wegregelung aktiviert wird, wobei anhand einer gespeicherten Weg-Kraftkennlinie ein mit dem Unterstützungsbremsdruck (Pᵤ) beaufschlagte Bremskolben des Bremsaktuators (2c, 2d) auf eine der vorgegebene Zuspannkraft entsprechenden Soll-Position eingeregelt wird.

7. Verfahren nach Anspruch 6,
**dadurch gekennzeichnet, dass**
eine Fehlermeldung erzeugt wird, wenn hinsichtlich des Bremskolbens die Soll-Position von einer ermittelten Ist-Position nicht erreicht wird.

8. Verfahren nach Anspruch 4,
**dadurch gekennzeichnet, dass**
- die Nachspannfunktion ein Nachspannen des Bremsaktuators (2c, 2d) mittels der Parkbremsenfunktion umfasst und dabei der Istwert (Iᵢₛₜ) der die von dem Bremsaktuator (2c, 2d) erzeugten Zuspannkraft repräsentierende Messgröße (I) erfasst wird, und
- das Nachspannen beendet wird, wenn der Istwert (Iᵢₛₜ) der Messgröße (I) einen einem zweiten Kraftsollwert (F_{2,soll}) entsprechenden zweiten Sollwert (I_{2,soll}) erreicht, wobei der zweite Kraftsollwert (F_{2,soll}) gegenüber dem ersten Kraftsollwert (F_{1,soll}) um einen dem Unterstützungsbremsdruck (Pᵤ) entsprechenden Kraftwert reduziert ist.

9. Verfahren nach Anspruch 8,
**dadurch gekennzeichnet, dass**
eine Fehlermeldung erzeugt wird, wenn der Istwert (Iᵢₛₜ) der Messgröße (I) den zweiten Sollwert (I_{2,soll}) nicht erreicht.

10. Verfahren nach Anspruch 8,
**dadurch gekennzeichnet, dass**
vor Durchführung des Nachspannens der mit dem Unterstützungsbremsdrucks (Pᵤ) beaufschlagte Bremsaktuator (2c, 2d) mittels einer Wegregelung um einen kleinen Wegbetrag in Löserichtung der Parkbremse gesteuert wird.

11. Verfahren nach einem der vorhergehenden Ansprüche,
**dadurch gekennzeichnet, dass**
nach Durchführung der Nachspannfunktion der hydraulische Unterstützungsbremsdruck (Pᵤ) abgebaut wird.

12. Verfahren nach einem der vorhergehenden Ansprüche,
**dadurch gekennzeichnet, dass**
der Bremsaktuator (2c, 2d) zur Durchführung der Parkbremsenfunktion von einem Elektromotor (2d) angetrieben wird und als die Zuspannkraft repräsentierende Messgröße (I) der Motorstrom des Elektromotors (2d) detektiert wird.

## Claims

1. Method for hydraulic boosting of an electric parking brake of a vehicle comprising at least one brake actuator (2c,2d), which for electric and hydraulic operation of the at least one brake actuator (2c,2d) comprises a hydraulic service brake function and an electric parking brake function, wherein an application force (F) electrically generated with the parking brake function is superimposed with a boosting brake force generated by subjecting the brake actuator (2c,2d) to a hydraulic boosting brake pressure (Pᵤ) provided by the service brake function,
**wherein**
- during operation of the parking brake to generate a specified application force, the application force generated by the brake actuator (2c, 2d) is detected as the actual value (Iᵢₛₜ) by means of a measurement variable (I) representing its value,
**characterized in that**
- if the actual value (Iᵢₛₜ) of the measurement variable (I) does not reach the first target value (I_{1,soll}) representing a first target force value (F_{1,soll}) of the application force, the brake actuator (2c, 2d) is subjected to a hydraulic boosting brake pressure (Pᵤ) that corresponds to a specified target boosting brake pressure value (P_{u,soll}), and
- by means of the parking brake function a further application function for further application of the brake actuator (2c, 2d) that is subjected to the hydraulic boosting brake pressure (Pᵤ) is performed to achieve the specified application force.

2. Method according to Claim 1,
**characterized in that**
to generate the hydraulic boosting brake pressure (Pᵤ) a means of generating pressure (3), preferably a hydraulic pump, is controlled by means of the service brake function.

3. Method according to Claim 2,
**characterized in that**
- the target boosting brake pressure value (P_{u,soll}) is set to a value at which the resulting boosting brake force corresponds to the first target force value (F_{1,soll}),
- following the generation of the hydraulic boosting brake pressure (Pᵤ) corresponding to the target force value (F_{1,soll}) the means of pressure generation (3) is switched off, and
- the boosting brake pressure (Pᵤ) applied to the brake actuator (2c, 2d) is hydraulically confined within the brake actuator (2c, 2d).

4. Method according to Claim 2,
**characterized in that**
- the target boosting brake pressure value (P_{u,soll}) corresponds to a specified inlet pressure target value (P_{u,vor}), wherein the resulting boosting brake force is smaller than the first target force value (F_{1,soll}), and
- following the generation of the hydraulic boosting brake pressure (Pᵤ) the means of generating pressure (3) is not switched off and the brake actuator (2c, 2d) is further subjected to the generated boosting brake pressure (Pᵤ).

5. Method according to Claim 3,
**characterized in that**
for further application of the parking brake the brake actuator (2c, 2d) is controlled by the confined boosting brake pressure (Pᵤ) by means of the parking brake function until the actual value (Iᵢₛₜ) of the measurement variable (I) of the application force corresponds to a target value (I_{2,soll}), which is smaller than the first target value (I_{1,soll}) corresponding to the first target force value (F_{1,soll}).

6. Method according to Claim 4,
**characterized in that**
for further application of the parking brake by means of the parking brake function a displacement control is activated, wherein a brake piston of the brake actuator (2c, 2d) that is subjected to the boosting brake pressure (Pᵤ) is controlled to a target position corresponding to the specified application force using a stored displacement-force characteristic.

7. Method according to Claim 6,
**characterized in that**
an error message is generated if in regard to the brake piston the target position is not reached by a determined actual position.

8. Method according to Claim 4,
**characterized in that**
- the further application function (2c, 2d) comprises further application of the brake actuator by means of the parking brake function and thereby the actual value (Iᵢₛₜ) of the measurement variable (I) representing the application force generated by the brake actuator (2c, 2d) is detected, and
- the further application is terminated if the actual value (Iᵢₛₜ) of the measurement variable (I) reaches a second target value (I_{2,soll}) corresponding to a second target force value (F_{2,soll}), wherein the second target force value (F_{2,soll}) is reduced relative to the first target force value (F_{1,soll}) by a force value corresponding to the boosting brake pressure (Pᵤ).

9. Method according to Claim 8,
**characterized in that**
an error message is generated if the actual value (Iᵢₛₜ) of the measurement variable (I) does not reach the second target value (I_{2,soll}).

10. Method according to Claim 8,
**characterized in that**
prior to performing the further application, the brake actuator (2c, 2d) that is subjected to the boosting brake pressure (Pᵤ) is controlled by a small displacement amount in the direction of releasing the parking brake by means of a displacement control.

11. Method according to any one of the preceding claims,
**characterized in that**
the hydraulic boosting brake pressure (Pᵤ) is reduced following performance of the further application function.

12. Method according to any one of the preceding claims,
**characterized in that**
the brake actuator (2c, 2d) for performing the parking brake function is driven by an electric motor (2d) and the motor current of the electric motor (2d) is detected as the measurement variable (I) representing the application force.

## Revendications

1. Procédé d'assistance hydraulique d'un frein de stationnement électrique d'un véhicule, qui comprend au moins un actionneur de frein (2c, 2d), lequel procédé comprend, pour l'actionnement électrique et hydraulique de l'au moins un actionneur de frein (2c, 2d) une fonction de frein de service hydraulique et une fonction de frein de stationnement électrique, dans lequel une force de serrage (F) générée électriquement au moyen de la fonction de frein de stationnement se superpose à une force de freinage d'assistance générée en soumettant l'actionneur de frein (2c, 2d) à une pression de freinage d'assistance hydraulique (Pᵤ) fournie par la fonction de frein de service,
dans lequel
- lorsque le frein de stationnement est actionné, pour générer une force de serrage prédéfinie, la force de serrage générée par l'actionneur de frein (2c, 2d) est détectée en tant que valeur réelle (Iᵢₛₜ) au moyen d'une grandeur de mesure (I) représentant sa valeur, **caractérisé en ce que**
- lorsque la valeur réelle (Iᵢₛₜ) de la grandeur de mesure (I) n'atteint pas la première valeur nominale (I_{1,soll}) représentant une première valeur nominale de force (F_{1,soll}) de la force de serrage, l'actionneur de frein (2c, 2d) est soumis à une pression de freinage d'assistance hydraulique (Pᵤ) qui correspond à une valeur nominale prédéfinie de la pression de freinage d'assistance (P_{u,soll}), et
- au moyen de la fonction de frein de stationnement, une fonction de resserrage pour le resserrage de l'actionneur de frein (2c, 2d) soumis à la pression de freinage d'assistance hydraulique (Pᵤ) est mise en oeuvre pour l'obtention de la force de serrage prédéfinie.

2. Procédé selon la revendication 1, **caractérisé en ce que**, pour générer la pression de freinage d'assistance hydraulique (Pᵤ), un moyen générateur de pression (3), de préférence une pompe hydraulique, est commandé au moyen de la fonction de frein de service.

3. Procédé selon la revendication 2, **caractérisé en ce que**,
- la valeur nominale de la pression de freinage d'assistance (P_{u,soll}) est réglée à une valeur pour laquelle la force de freinage d'assistance ainsi produite correspond à la première valeur nominale de force (F_{1,soll}),
- après avoir généré la pression de freinage d'assistance (Pᵤ) correspondant à la valeur nominale de force (F_{1,soll}), le moyen générateur de pression (3) est désactivé, et
- la pression de freinage d'assistance (Pᵤ) appliquée à l'actionneur de frein (2c, 2d) est injectée hydrauliquement dans l'actionneur de frein (2c, 2d).

4. Procédé selon la revendication 2, **caractérisé en ce que**,
- la valeur nominale de la pression de freinage d'assistance (P_{u,soll}) correspond à une valeur nominale de pression préalable prédéfinie (P_{u,vor}), dans lequel la force de freinage d'assistance ainsi produite est inférieure à la première valeur nominale de force (F_{1,soll}), et
- après avoir généré la pression de freinage d'assistance (Pᵤ), le moyen générateur de pression (3) n'est pas désactivé, et l'actionneur de frein (2c, 2d) est en outre soumis à la pression de freinage d'assistance (Pᵤ) générée.

5. Procédé selon la revendication 3, **caractérisé en ce que**,
pour resserrer le frein de stationnement, l'actionneur de frein (2c, 2d) est commandé avec la pression de freinage d'assistance injectée (Pᵤ) au moyen de la fonction de frein de stationnement jusqu'à ce que la valeur réelle (Iᵢₛₜ) de la grandeur de mesure (I) de la force de serrage corresponde à une valeur nominale (I_{2,soll}) qui est inférieure à la première valeur nominale (I_{1,soll}) correspondant à la première valeur nominale de force (F_{1,soll}).

6. Procédé selon la revendication 4, **caractérisé en ce que**,
pour resserrer le frein de stationnement au moyen de la fonction de frein de stationnement, une régulation de déplacement est activée, un piston de frein, soumis à la pression de freinage d'assistance (Pᵤ), de l'actionneur de frein (2c, 2d) étant régulé à une position nominale correspondant à la force de serrage prédéfinie sur la base d'une courbe caractéristique déplacement-force stockée en mémoire.

7. Procédé selon la revendication 6, **caractérisé en ce qu'**un message d'erreur est généré lorsque la position réelle déterminée du piston de frein n'atteint pas la position nominale.

8. Procédé selon la revendication 4, **caractérisé en ce que**
- la fonction de resserrage comprend un resserrage de l'actionneur de frein (2c, 2d) au moyen de la fonction de frein de stationnement, la valeur réelle (Iᵢₛₜ) de la grandeur de mesure (I) représentant la force de serrage générée par l'actionneur de frein (2c, 2d) étant ainsi détectée, et
- le resserrage est interrompu lorsque la valeur réelle (Iᵢₛₜ) de la grandeur de mesure (I) atteint une seconde valeur nominale (I_{2,soll}) correspondant à une seconde valeur nominale de force (F_{2,soll}), la seconde valeur nominale de force (F_{2,soll}) étant réduite d'une valeur de force correspondant à la pression de freinage d'assistance (Pᵤ) par rapport à la première valeur nominale de force (F_{1,soll}).

9. Procédé selon la revendication 8,
**caractérisé en ce qu'**un message d'erreur est généré lorsque la valeur réelle (Iᵢₛₜ) de la grandeur de mesure (I) n'atteint pas la seconde valeur nominale (I_{2,soll}).

10. Procédé selon la revendication 8, **caractérisé en ce que**, avant de mettre en oeuvre le resserrage, l'actionneur de frein (2c, 2d) soumis à la pression de freinage d'assistance (Pᵤ) est commandé au moyen d'une régulation de déplacement selon une plus faible valeur de déplacement dans le sens du desserrage du frein de stationnement.

11. Procédé selon l'une quelconque des revendications précédentes,
**caractérisé en ce que**, après la mise en oeuvre de la fonction de resserrage, la pression de freinage d'assistance hydraulique (Pᵤ) est réduite.

12. Procédé selon l'une quelconque des revendications précédentes,
**caractérisé en ce que** l'actionneur de frein (2c, 2d) est entraîné par un moteur électrique (2d) pour mettre en oeuvre la fonction de frein de stationnement et **en ce que** le courant de moteur du moteur électrique (2d) est détecté en tant que grandeur de mesure (I) représentant la force de serrage.
